# EUROPÄISCHE PATENTSCHRIFT

(11) **EP 0 741 237 B1**
(45) Veröffentlichungstag und Bekanntmachung des Hinweises auf die Patenterteilung: **15.07.1998**
(21) Anmeldenummer: 96890071.2
(22) Anmeldetag: 22.04.1996
(51) Int. Cl.: F02B 23/10

(54) **Brennkraftmaschine mit Fremdzündung**
Spark ignited combustion engine
Moteur à combustion à allumage commandé

(30) Priorität: 03.05.1995 AT 757/95
(43) Veröffentlichungstag der Anmeldung: 06.11.1996
(73) Patentinhaber: AVL List GmbH, 8020 Graz (AT)
(72) Erfinder: Wirth, Martin, Dr. Ing. Dipl.-Ing., 8151 Hitzendorf (AT); Piock, Walter, Dr., 8151 Hitzendorf (AT)
(74) Vertreter: Krause, Walter, Dr. Dipl.-Ing.

(56) Entgegenhaltungen:
- EP-A- 0 598 941
- FR-A- 2 235 270
- BIENNUAL INT. CONF. ON NATURAL GAS VEHICLES, 22. - 25.September 1992, GOTTEBORG (SE), Seiten 303-315, XP000391355 D.P. CLARKE ET AL.: "Development of a Medium Duty, Turbocharged, Lean Burn Natural Gas Engine""
- PATENT ABSTRACTS OF JAPAN vol. 009, no. 158 (M-393), 3.Juli 1985 & JP-A-60 032928 (YANMAR DIESEL KK), 20.Februar 1985,
- SAE TRANSACTIONS, 1.Januar 1979, Seiten 2706-2725, XP000575575 SCUSSEL A J ET AL: "THE FORD PROCO ENGINE UPDATE"
- SAE TECHNICAL PAPER SERIES, 1.Januar 1989, Seite 70 XP000575576 KINGSTON JONES M G ET AL: "NEBULA COMBUSTION SYSTEM FOR LEAN-BURN SPARKIGNITED GAS ENGINES"

## Beschreibung

Die Erfindung betrifft eine Brennkraftmaschine mit Fremdzündung und zumindest einem hin- und hergehenden Kolben, mit mindestens einer Kraftstoffeinbringungseinrichtung pro Zylinder zur direkten Kraftstoffeinbringung in den im wesentlichen im Kolben angeordneten und von einer Kolbenmulde gebildeten Brennraum, welcher durch bis zum Brennraumboden reichende Einschnürungen in zumindest zwei Teilbrennräume unterteilt ist, wobei die Teilbrennräume in Draufsicht asymmetrisch ausgebildet und drehsymmetrisch zu einer durch den Brennraummittelpunkt gehenden parallel zur Kolbenlängsachse liegenden Brennraumachse angeordnet sind, mit einem minimalen Abstand im Bereich der Einschnürungen der Brennraumwand und einem maximalen Abstand in konkav ausgebildeten Bereichen der Brennraumwand, jeweils gemessen in einer knapp unterhalb des Kolbenbodens liegenden Schnittebene ausgehend von der Brennraumachse, wobei das Verhältnis minimaler Abstand zum maximalen Abstand mindesten 0,2 und höchstens 0,5 beträgt, wobei während der Ansaugphase eine Drallströmung im Zylinder gebildet wird, welche um eine zur Zylinderachse parallele Achse rotiert, und wobei die Brennraumwand jeder Teilkammer im Bereich des minimalen Abstandes und im bezug auf die Drallströmung stromabwärts der Einschnürung zur Kolbenlängsachse geneigt ist, wobei die Neigung sich stromabwärts stetig bis zum Bereich des maximalen Abstandes verringert.

Ständig steigende Anforderungen an den Kraftstoffverbrauch und die Reduktion der Abgasemissionen, insbesondere der Kohlenwasserstoffe, erfordern den Einsatz neuer Technologien im Bereich der Verbrennungskraftmaschinen. Durch den heute üblichen Einsatz einer externen Gemischbildung bei Otto-Motoren, wie z. B. durch die Verwendung einer Saugrohreinspritzung oder eines Vergasers, strömt ein Teil des in den Brennraum und Zylinder eingesaugten Gemisches während der Ventilüberschneidungsphase, wenn Auslaß- und Einlaßventil gleichzeitig offen sind, in den Auspufftrakt der Brennkraftmaschine. Ein nicht unerheblicher Teil der meßbaren unverbrannten Kohlenwasserstoffe im Auspufftrakt stammt auch von Gemischteilen, die sich während der Verbrennung in Ringspalten oder wandnahen Bereichen, wo keine Verbrennung stattfindet, aufhalten. Zu diesen genannten Punkten kommt die notwendige Homogenisierung der Zylinderladung bei einem annähernd stöchiometrischen Mischungsverhältnis von Kraftstoff und Luft hinzu, welches eine sichere und aussetzerfreie Verbrennung sicherstellt. Dies bedingt eine Regelung der Motorlast mit Hilfe eines Drosselorganes zur Begrenzung der insgesamt angesaugten Gemischmenge (Quantitätsregelung).

Diese Drosselung der Ansaugströmung führt zu einem thermodynamischen Verlust, der den Kraftstoffverbrauch der Verbrennungskraftmaschine erhöht. Das Potential zur Verbrauchsreduzierung der Verbrennungskraftmaschine bei Umgehung dieser Drosselung kann auf etwa 20% geschätzt werden.

Um diese Nachteile zu verhindern bzw. zu vermindern, werden schon seit langem Versuche unternommen, fremdgezündete Verbrennungskraftmaschinen ungedrosselt zu betreiben und den Kraftstoff erst nach Beendigung der Luftansaugung, wie bei einer selbstzündenden Brennkraftmaschine, innerhalb des Brennraumes und Zylinders oder einer unmittelbar angechlossenen Mischkammer einzubringen.

Dabei sind grundsätzlich drei Gemischbildungssysteme zu unterscheiden:
- Flüssigkeitshochdruckeinspritzung
- Luftunterstützte Kraftstoff-Einbringung
- Gemischeinblasung.

Aus SAE 780699 ist ein Verfahren bekannt, bei dem der Kraftstoff mittels einer Hochdruckeinspritzdüse direkt in den Brennraum der Verbrennungskraftmaschine eingespritzt wird. Die notwendige Zeit für die Aufbereitung des Gemisches begrenzt den zeitlichen Minimalabstand zwischen Einspritzzeitpunkt und Zündzeitpunkt. Es ist ein hohes Druckniveau für den Einspritzvorgang notwendig, um einerseits kurze Einspritzzeiten und andererseits eine gute Zerstäubung des Kraftstoffes mit entsprechend kleinem Tropfenspektrum zu erhalten. Die Aufbereitung und Dosierung des Kraftstoffes findet gleichzeitig statt. Um nur ein örtlich begrenztes Gebiet mit brennbarem Kraftstoffluftgemisch zu erhalten, ist es andererseits notwendig, erst sehr spät im Motorzyklus den Kraftstoff einzubringen (ggf. erst während der Kompression kurz vor der Zündung), um die Zeit für die Ausbreitung und Verdünnung des Gemisches in der Brennraumluft zu begrenzen. Die Forderungen nach genügend früher Einspritzung für vollständige Kraftstoffverdampfung und möglichst später Einspritzung zur Aufrechterhaltung der Gemischschichtung stehen daher im Gegensatz zueinander. Die Entwicklungsbemühungen müssen somit darauf gerichtet sein, einerseits die charakteristische Zeit für die Gemischaufbereitung zu verkürzen und andererseits die charakteristische Zeit der Aufrechterhaltung der gewünschten Gemisch-Schichtung zu verlängern.

Aus der WO 88/08082 ist die Anwendung einer luftunterstützenden Einbringung des Kraftstoffes in den Brennraum und Zylinder einer Brennkraftmaschine bekannt. Dabei wird diese Druckluft extern, d. h. außerhalb des Brennraumes, erzeugt und während der Kompressionsphase der Brennkraftmaschine dazu benutzt, den Kraftstoff einzubringen. Der Gasdruck der externen Druckluftversorgung begrenzt den Einbringungszeitpunkt, da während der Einbringung ein Druckgefälle zwischen Einbringungsvorrichtung und Brennraum herrschen muß. Die Dosierung des Kraftstoffes findet entkoppelt zur luftunterstützten Aufbereitung statt. Durch die Verwendung verschiedener Gasdrücke der externen Druckluftversorgung ist eine Variation der Strahlgeometrie möglich.

Aus der EP 0 328 602 B1 ist eine Einrichtung zum Einbringen von Kraftstoff in den Brennraum und Zylinder einer Brennkraftmaschine bekannt, bei der ein Einblaseventil und eine Mischkammer zum Entnehmen von verdichtetem Gas aus dem Zylinderraum und zum Einblasen eines Kraftstoffluftgemisches in den Zylinderraum während des nächsten Arbeitsspieles verwendet wird. Durch die Ausnutzung des Zylinderdruckes als Speicherdruck ist prinzipiell jeder Einblasezeitpunkt möglich. Die Aufbereitung (Verdampfung) des Kraftstoffes ist getrennt von der Dosierung und findet überwiegend im Speicherraum durch Zerstäubung und Vorverdampfung vor der eigentlichen Einbringung in den Brennraum und Zylinder statt. Der zeitliche Ablauf umfaßt folgende Schritte:
- Zeitlich steuerbare Entnahme einer kleinen Menge komprimierten heißen Gases über ein in den Brennraum des Zylinders öffnendes Ventil.
- Speicherung des komprimierten heißen Gases in einer Mischkammer.
- Einspritzen von Kraftstoff in die Mischkammer in das komprimierte heiße Gas.
- Einblasen des gespeicherten Kraftstoffluftgemisches durch das in den Zylinder öffnende Ventil.

Durch die Aufbereitung des Gemisches in der oben genannten Mischkammer tritt beim Einblasevorgang ein Gemischstrahl in den Brennraum ein, dessen Luftverhältnis deutlich unterstöchiometrisch ist (λ < 0.3). Die charakteristische Zeit der Gemischaufbereitung wird stark reduziert. Im Falle der Einspritzung von flüssigem Kraftstoff unter hohem Druck tritt eine ähnlich geformte, feinzerstäubte und verdampfende Tröpfchenwolke in den Brennraum ein.

Es stellt sich nun die Aufgabe, aus dem Einblase- oder Einspritzstrahl eine örtlich begrenzte Gemischwolke zu erzeugen, diese von der Mündung des Einblase- oder Einspritzventiles in die Nähe der Zündkerze zu transportieren und das Gemisch innerhalb der Wolke weiter mit Brennraumluft zu vermischen. Dabei sind folgende Punkte wesentlich:
a) Die Gemischwolke muß insbesondere bei niedrigen Motorlasten deutlich abgegrenzt bleiben und sich aus thermodynamischen Gründen sowie zur Reduzierung der Emissionen unverbrannter Kohlenwasserstoffe möglichst in der Mitte des Brennraumes befinden.
b) Die Verdünnung des eingeblasenen Gemisches auf ein vorzugsweise stöchiometrisches Luftverhältnis muß in der vergleichsweise kurzen Zeitspanne zwischen Einblasezeitpunkt und Zündzeitpunkt erfolgen.
c) An der Zündkerze sollte eine geringe mittlere Strömungsgeschwindigkeit und gleichzeitig ein hohes Turbulenzniveau herrschen, um die Entflammung der Gemischwolke durch den Zündfunken zu begünstigen.

Ein wichtiges Problem eines solchen Brennverfahrens liegt in den zyklischen Schwankungen des Gemischbildungsvorganges, also der Änderung des Ablaufes von einem Motorzyklus zum nächsten aufgrund der Turbulenz der Strömungsvorgänge im Ansaugsystem und Zylinder der Brennkraftmaschine. Um diese Schwankungen so gering wie möglich zu halten, sollte im Zylinder eine Strömungsform erzeugt werden, die eine hohe Stabilität aufweist und insbesondere während der Kompressionsphase des Motorzyklusses erhalten bleibt und nicht in ungeordnete turbulente Strömungsbewegungen übergeht. Diese Forderung wird am besten von einer Drallströmung erfüllt.

Unter einer Drallströmung versteht man die Rotationsströmung im Zylinder, die in an sich bekannter Weise um eine im wesentlichen zur Zylinderachse parallelen Achse erfolgt, die ebenfalls durch die Einlaßkanalgestaltung und die Einmündung des oder der Einlaßkanäle in den Brennraum und Zylinder der Brennkraftmaschine verursacht wird. Während der Kompression erfolgt nur eine geringfügige Veränderung des Strömungsbildes, da der Durchmesser des Wirbels durch die Kolbenbewegung nicht verändert wird. Vor dem oberen Totpunkt ist somit eine stabile Rotationsbewegung der angesaugten Luft im Brennraum und Zylinder gegeben.

Ziel der Erfindung ist es nun, diese stabile Drallströmung mit Hilfe der Form des den Brennraum begrenzenden Kolbenbodens derart umzuformen und das Einspritz- oder Einblaseorgan derart in diesem Brennraum anzuordnen, daß die oben genannten Einflüsse auf die Gemischwolke erreicht werden.

Aus der EP 0 598 941 A1, die als nächstliegender Stand der Technik angesehen wird, ist das Prinzip einer Kolbenmulde bekannt, welche bei geeigneter Ausgestaltung die Strömung des um die Zylinderachse rotierenden Drallwirbels während der Kompressionsphase in Richtung auf die Zylinderachse umlenkt. Dies wird erreicht durch die zwei- oder dreiflügelige Ausgestaltung der Kolbenmulde. Die zwischen den Ausbuchtungen der Mulde liegenden Einzüge der Muldenseitenwand lenken die Drallströmung beim Eintritt in die Mulde während der Kompressionsphase zur Zylindermitte um, sodaß im Zentrum der Kolbenmulde durch Kollision der gegenüberliegenden und zur Zylindermitte gerichteten Strömungen ein deutlich erhöhtes Turbulenzniveau erreicht wird. Zusätzliche Turbulenzproduktion wird in dieser Art der Kolbenmulde durch Strömungsablösung an den Muldenkanten beim Eintritt der Drallströmung in die Kolbenmulde erreicht. Gleichzeitig wird im Bereich der Brennraummitte aufgrund der rotationssymmetrischen Gestaltung eine niedrige mittlere Strömungsgeschwindigkeit erzeugt.

In der EP 0 598 941 A1 ist diese Produktion von Turbulenz das alleinige Ziel zur Beschleunigung der Verbrennung magerer Gemische und der Verdampfung von Kraftstoff-Wandfilmen.

Weiters ist aus SAE 890211 die sogenannte Nebula-Brennkammer einer Brennkraftmaschine der eingangs beschriebenen Art bekannt, mit welcher hohe Ladungsturbulenzen zum Zeitpunkt der Zündung während der Verbrennung erzeugt werden können. Die Turbulenzen werden im Nebula-Brennraum durch zwei im gleichen Drehsinn zum Zylindermittelpunkt gerichtete Strömungen im Brennraum erzeugt. Bis zu einer Luftzahl λ=1,6 ist ein befriedigender Magerbetrieb bei gasförmigen Kraftstoffen möglich.

Aufgabe der Erfindung ist es, eine Brennkraftmaschine der eingangs genannten Art weiterzubilden und eine möglichst vollständige Verbrennung des direkt in den Brennraum eingebrachten Flüssigkraftstoffes oder Kraftstoffdampfes bei niedrigem Verbrauch und geringen Abgasemissionen zu erreichen.

Erfindungsgemäß wird dies dadurch erreicht, daß die Kraftstoffeinbringungseinrichtung in einer Position außerhalb der Brennraummitte angeordnet ist, von der aus der Kraftstoff, vorzugsweise in einer zur Brennraumachse geneigten Richtung einbringbar ist, die Zündeinrichtung etwa im Bereich der Brennraummitte angeordnet ist und die Einschnürungen der Kolbenmulde etwa in den Bereich der Brennraummitte gerichtete Abströmflächen etwa parallel zur Brennraumachse aufweisen, deren größte Annäherung zum Brennraummittelpunkt etwa zwischen 0 und 0,2 mal dem Kolbendurchmesser beträgt. Während der Ansaugphase des Motors wird durch den zumindest einen Drall erzeugend ausgebildeten Einlaßkanal ein Drallwirbel um die Zylinderlängsachse erzeugt. Während der Kompressionsphase teilt sich der Drallwirbel beim Eintritt in die Kolbenmulde in gleichsinnig rotierende Teilwirbel auf, deren Zahl der Anzahl der Teilbrennräume entspricht. In zumindest einen Teilwirbel wird Kraftstoff bzw. Kraftstoffluftgemisch während der Kompressionsphase einespritzt bzw. eingeblasen. Das eingespritzte bzw. eingeblasene Gemisch wird in einem Teilwirbel zu einer örtlich begrenzten und stabilen Gemischwolke eingeschlossen. Durch die erfindungsgemäße Gestaltung des Brennraumes bildet sich in der Brennraummitte eine Zone erhöhter Turbulenzproduktion, welche eine beschleunigte Aufbereitung der Gemischwolke zu zündfähigem Gemisch ermöglicht. Im Bereich der zentral angeordneten Zündkerze herrscht aufgrund der zur Brennraummitte symmetrischen Strömung eine geringe mittlere Geschwindigkeit bei gleichzeitig hoher Turbulenzintensität, was die Entflammung des Gemisches begünstigt.

Um eine zu große Entfernung der Gemischwolke von der Zündkerze in Richtung der Zylinderachse zu vermeiden, ist es günstig, den Boden der Kolbenmulde flach auszuführen.

Es hat sich herausgestellt, daß die besten Ergebnisse erzielt werden, wenn das Verhältnis der Tiefe zum größten Abstand in einem Verhältnis etwa zwischen 0,3 und 0,6 liegt, und der Boden der Kolbenmulde mindestens im Bereich des größten Abstandes im wesentlichen eben ausgeführt ist.

Zur Erzeugung einer räumlich zusammenhängenden Gemischwolke ist es vorteilhaft, wenn das Verhältnis zwischen dem Abstand der Mündung der Kraftstoffeinbringungseinrichtung zur Brennraummitte und dem Kolbendurchmesser etwa 0,1 bis 0,4 beträgt. Ein guter Zusammenhalt einerseits und ein rascher Transport andererseits des Gemisches zur Brennraummitte ist möglich, wenn die Verbindungsgerade zwischen der Mündung der Kraftstoffeinbringungseinrichtung und der Brennraummitte zu einer durch die Brennraumachse verlaufenden Normalebene auf die Abströmflächen einen Winkel etwa zwischen -30° und 60° aufweist, wobei der Winkel positiv in Wirbeldrehrichtung definiert ist. Vorteilhafterweise ist dabei vorgesehen, daß die Symmetrieachse der Kraftstoffeinbringungseinrichtung zu einer zur Brennraumachse senkrechten Ebene einen Winkel etwa zwischen 30° und 85° einschließt.

Zur Erzielung einer raschen Verbrennung des Gemisches ist es vorteilhaft, daß die Zündeinrichtung maximal etwa 0,1 mal dem Kolbendurchmesser von der Brennraummitte entfernt ist. Außerhalb dieses Bereiches ist durch höhere mittlere Strömungsgeschwindigkeiten die Gefahr von Zündaussetzern gegeben.

Um ein Ablösen der Strömung beim Einströmen in die Kolbenmulde zu verhindern, ist vorgesehen, daß die einströmseitigen Kanten der Teilbrennräume ein strömungsgünstig gerundetes Profil aufweisen.

Besonders vorteilhaft ist es, wenn in einer Draufsicht betrachtet, pro Teilbrennraum die Krümmung der Muldenwände in Strömungsrichtung zunimmt. Dadurch wird eine hohe Turbulenz im Bereich der Brennraummitte erreicht, und die Ausbildung von getrennten Teilwirbeln unterstützt.

Die Kraftstoffeinbringungseinrichtung kann als Einblaseventil oder auch als Einspritzventil ausgebildet sein, wobei der von der Kraftstoffeinbringungseinrichtung erzeugte Strahl vorzugsweise kegelförmig ausgebildet ist.

Die Erfindung wird anhand der Figuren näher erläutert. Es zeigen:
- Fig. 1: eine schematische Schrägansicht eines Brennraumes einer erfindungsgemäßen Brennkraftmaschine in einer Ausführungsvariante mit zwei Teilbrennräumen,
- Fig. 2: eine Draufsicht auf den Kolben aus Fig. 1,
- Fig. 2a: einen Schnitt nach der Linie IIa-IIa in Fig. 2,
- Fig. 2b: einen Schnitt nach der Linie IIb-IIb in Fig. 2,
- Fig. 2c: einen Schnitt nach der Linie IIc-IIc in Fig. 2,
- Fig. 2d: eine Draufsicht auf eine andere Ausführungsvariante der Erfindung mit drei Teilbrennräumen,
- Fig. 3: eine weitere Schrägansicht des Brennraumes,
- Fig. 4a und Fig. 4b: eine Draufsicht auf den Brennraum mit verschieden ausgebildeten Strömungen,
- Fig. 5: eine weitere Draufsicht auf den Brennraum,
- Fig. 6a: eine weitere Schrägansicht auf den Brennraum,
- Fig. 6b: eine Draufsicht auf den Brennraum mit schematisch eingezeichneten Kraftstoffeinbring- und Zündeinrichtung,
- Fig. 7: eine weitere Draufsicht auf den Brennraum mit eingezeichneten Turbulenz- und Gemischbereichen.

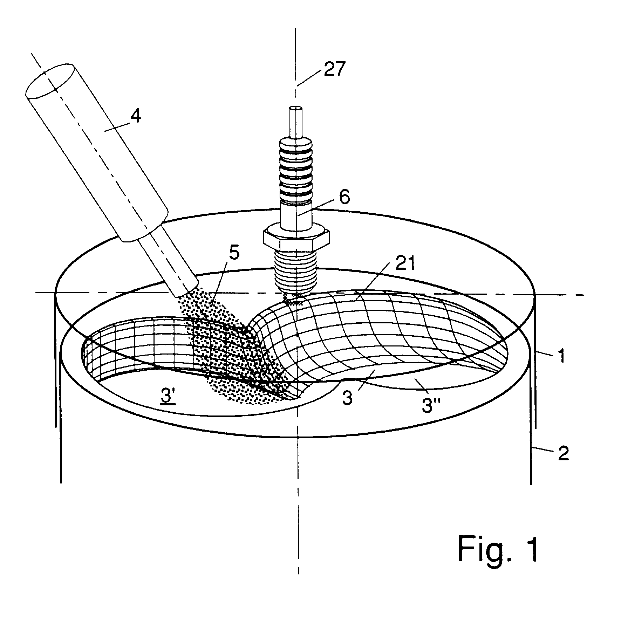

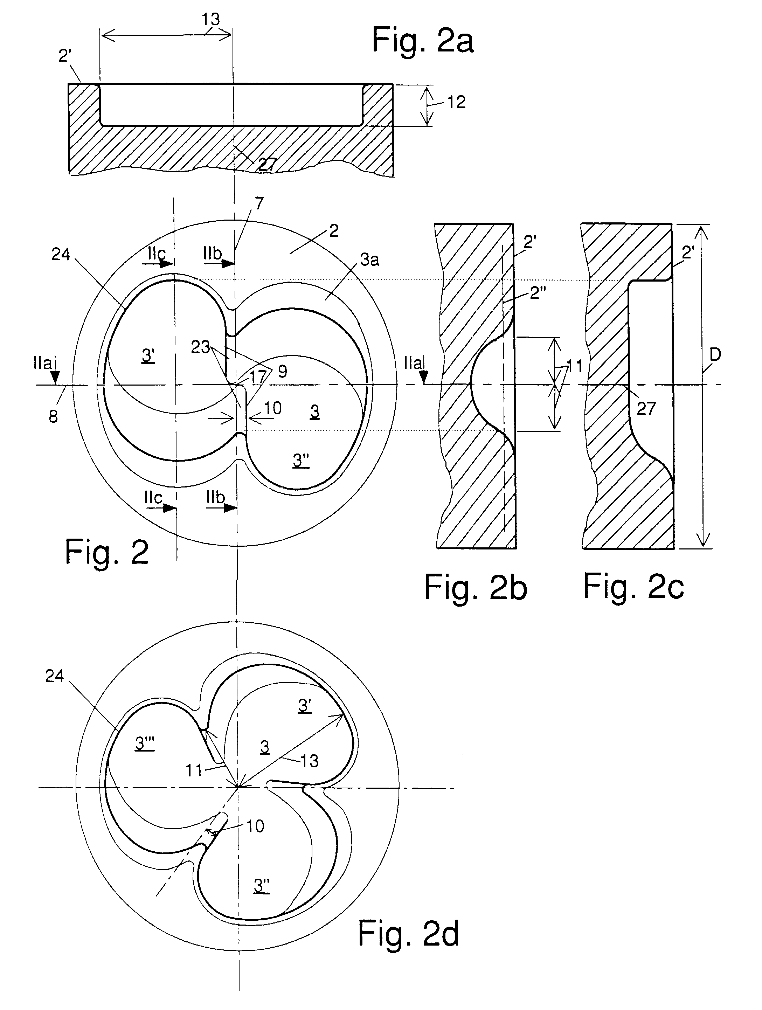

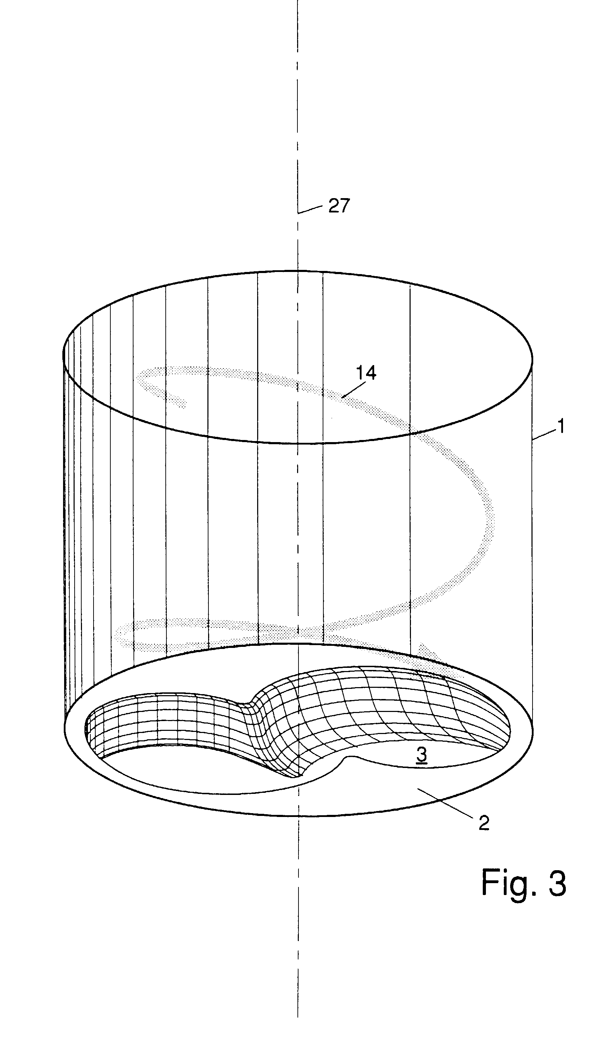

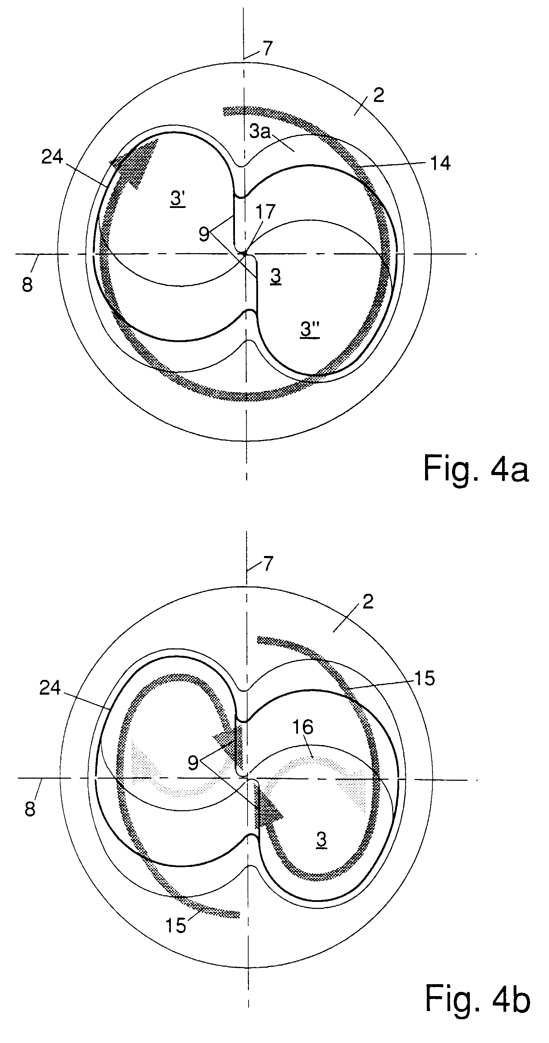

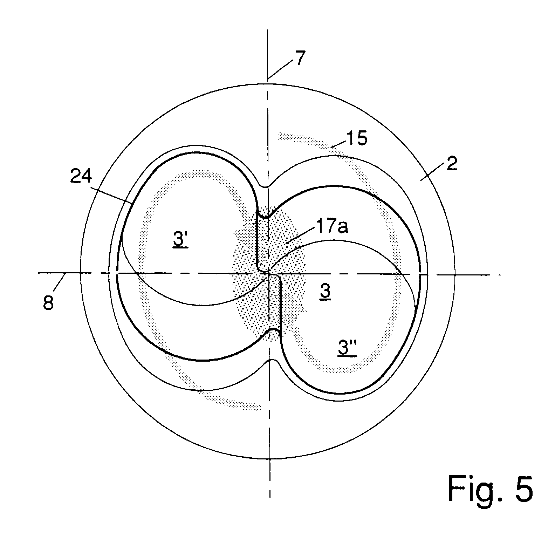

Wie in Fig. 1 gezeigt, weist der in einem Zylinder 1 hin- und hergehende Kolben 2 eine Kolbenmulde 3 auf, welche den Brennraum bildet. Durch seitliche Einschnürungen 23 ist der Brennraum in Teilbrennräume 3', 3" geteilt. In einen Teilbrennraum 3' wird über die Kraftstoffeinbringungseinrichtung 4 Kraftstoff 5 eingeblasen oder eingespritzt. Im Bereich der Brennraummitte ist eine Zündeinrichtung 6 angeordnet. Bei geeigneter Ausgestaltung der Mulde 3, insbesondere einem in Fig. 2 ersichtlichen seitlichen Versatz 10 der in den Einschnürungen 23 enthaltenen Abströmflächen 9 gegenüber der zu den Abströmflächen 9 parallelen Bezugsachse 7 kann erreicht werden, daß der Drallwirbel 14 (Fig. 3) durch den Eintritt 3a in die Mulde 3 während der Kompression in Teilwirbel 15 entsprechend der Anzahl der Teilräume der Mulde 3 zerteilt wird. Der seitliche Versatz 10 liegt etwa in einem Bereich von 0 bis 0,2 des Kolbendurchmessers D. Die ausgebildeten Teilwirbel 15 sind aufgrund der nahezu vollständigen Umschließung durch die Muldenwände 24 insbesondere im Bereich nahe des Muldenbodens 16 sehr stabil. Im oberen Bereich der Mulde 3 ist der minimale Abstand 11 der Einschnürungen 23 derart vergrößert, daß ein Ablösen der Teilwirbelströmungen 15 an den Abströmflächen 9 auftritt, was zur Kollision der gegenüberliegenden Strömungen und damit zur Turbulenzproduktion in der Brennraummitte 17 im oberen Brennraumbereich führt. Um diese erhöhte Turbulenzproduktion auf die Brennraummitte 17 zu beschränken, werden diejenigen Kanten 21 am Eintritt 3a der Kolbenmulde 3, über welche die Drallströmung 14 in die Mulde 3 einströmt, mit einem gerundeten Einlaufprofil versehen, um eine Ablösung der Strömung und die damit verbundene Turbulenzproduktion in diesen Bereichen zu verhindern. Bei der Aufteilung des Hauptwirbels 14 (Fig. 4a) in die Teilwirbel 15,16 (Fig. 4b, Fig. 5) erfolgt eine Erhöhung der Umdrehungsgeschwindigkeit aufgrund der Verringerung des Wirbeldurchmessers (Drallerhaltung), was die Beeinflussung einer eingespritzten oder eingeblasenen Gemischwolke durch diese Strömung verstärkt.

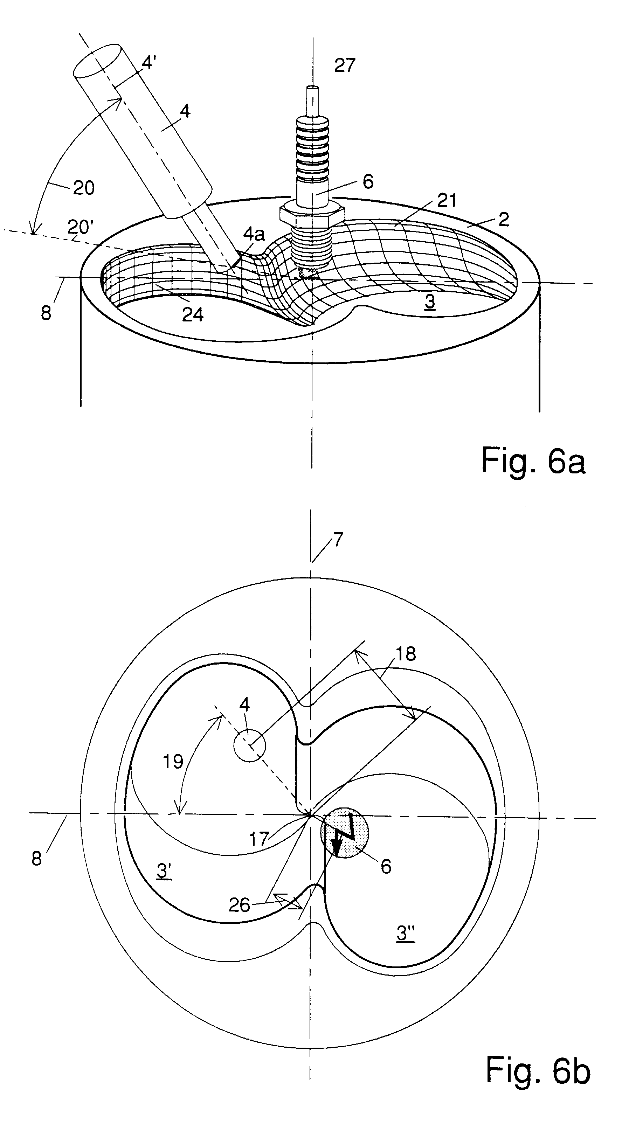

Bei niedrigen Motorlasten und damit kleinen Gemischmengen, die eine besonders starke Schichtung der Luft-Gemischverteilung im Brennraum erfordern, erfolgt die Gemischeinbringung vorzugsweise sehr spät in der Kompressionsphase. Die Zylinderfüllung befindet sich damit bereits zum überwiegenden Teil in der Kolbenmulde 3, d. h. die von der Kolbenmulde erzeugte Umformung der Strömungsbewegung stellt die dominierende Strömungsform im Brennraumvolumen dar. Die Kraftstoffeinbringungseinrichtung 4 - ein Einspritz- oder Einblaseorgan - ist nun erfindungsgemäß in einer Position außerhalb der Brennraummitte (17) so angeordnet, daß der Einspritz- oder Einblasestrahl von der exzentrisch zur Brennraumachse 27 gelegenen Position der Kraftstoffeinbringungseinrichtung 4 vorzugsweise auf die Brennraumachse 27 gerichtet in den durch die Kolbenmulde 3 gebildeten Brennraum gelangt. Die Position der Kraftstoffeinbringungseinrichtung 4 gegenüber der Kolbenmulde 3 ist so eingerichtet, daß die Einspritzung oder Einblasung in nur einen der in der Mulde 3 ausgebildeten Teilwirbel 15 erfolgt. Die Position der Kraftstoffeinbringungseinrichtung 4 ist durch den radialen Abstand 18 und den Winkel 19 gegenüber der Bezugsachse 8 der Kolbenmulde 3 sowie durch den Winkel 20 der Mittelachse der Kraftstoffeinbringungseinrichtung 4 gegenüber der von den Bezugsachsen 7, 8 der Kolbenmulde 3 aufgespannten Ebene gegeben. Der radiale Abstand 18 soll mindestens 0.1 D und maximal 0.4 D betragen, wobei D den Durchmesser des Kolbens 2 bezeichnet. Der Winkel 19 soll zwischen -30° und 60° betragen. Der Winkel 19 ist positiv in Drehrichtung des Teilwirbels 15 definiert. Der Winkel 20 soll Werte zwischen 30° und 85° annehmen. (Fig. 6a, 6b)

Die Zündkerze 6 soll in der Brennraummitte 17 mit einer maximalen Exzentrizität 26 gegenüber der Zylinderachse von 0.1 D angeordnet sein.

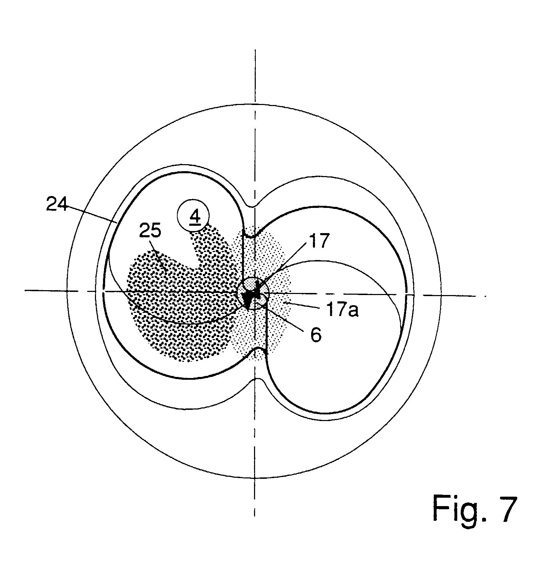

Der in den Brennraum eintretende Einspritz- oder Einblasestrahl 5 wird von der Strömung des Teilwirbels abgelenkt und zu einer Gemischwolke 25 umgeformt (Fig. 7). Im unteren Bereich der Kolbenmulde 3 erfolgt ein Einrollen des Gemisches in den durch die Muldenwände begrenzten Teilwirbel 15. Im oberen Bereich der Kolbenmulde gelangt ein Teil des Kraftstoffes in die kollidierende Strömung und damit in die zentrale Zone erhöhter Turbulenzproduktion. Um eine zu große Entfernung der Gemischwolke 25 von der Zündkerze 6 in Richtung der Brennraumachse 27 zu vermeiden, ist die Kolbenmulde 3 flach auszuführen. Der größte Abstand 13 der Wand 24 der Mulde 3 von der Brennraummitte 17 sollte das maximal im Kolbenboden 2' realisierbare Maß annehmen, das durch die - nicht weiter dargestellten - Kolbenringe begrenzt wird und an der Oberkante mindestens 0.3 D betragen (Fig. 2a). Die Tiefe 12 der Kolbenmulde 3 sollte zum größten Abstand in einem Verhältnis zwischen 0.3 und 0.6 stehen. Der minimale Abstand 11 der Wand 24 der Mulde 3 liegt im Bereich der Einschnürungen 23 und beträgt 0,2 bis 0,5 mal dem maximalen Abstand 13 (Fig. 2b), gemessen in einer Ebene 2" knapp unmittelbar unterhalb des Kolbenbogens 2'. Diese Angaben gelten auch für Brennräume 3 mit mehr als zwei, beispielsweise drei Teilbrennräumen 3', 3", 3"', wie in Fig. 2d dargestellt ist.

Mit dieser erfindungsgemäßen Einbringung des Kraftstoffes werden zwei Ziele verfolgt.
1) Da die beiden Teilwirbel 15 stabile Strömungsstrukturen darstellen und in der Brennraummitte 17 trotz der dort auftretenden Turbulenzproduktion nur ein geringer Gasaustausch zwischen den beiden Teilwirbeln 15 erfolgt, wird auf diese Weise die Luftmenge, die an der weiteren Verdünnung des Gemisches teilnimmt, verringert.
2) Teile des vorzugsweise kegelförmigen Einspritz- oder Einblasestrahls 5 sowie die Randbereiche der in einem der Teilwirbel 15 befindlichen Gemischwolke 25 werden in die zentral im Brennraum sich ausbildende Zone erhöhter Turbulenz 17a transportiert (Fig. 5). Dies wiederum stellt die beschleunigte Aufbereitung des stark unterstöchiometrisch eingespritzten oder eingeblasenen Gemisches zu zündfähigem, vorzugsweise stöchiometrischem Gemisch in der unmittelbaren Nähe der etwa in Brennraummitte 17 angeordneten Zündkerze 6 bei gleichzeitig günstigen Zündbedingungen (erhöhte Turbulenz, geringe mittlere Geschwindigkeit) sicher. Damit werden alle zu stellenden Anforderungen zur Realisierung des angestrebten Brennverfahrens erfüllt:
   - Das eingespritzte oder eingeblasene Gemisch wird in einem Teilwirbel 15 zu einer örtlich begrenzten und stabilen Gemischwolke 25 eingeschlossen. (Fig. 7)
   - In der Zone erhöhter Turbulenzproduktion in Brennraummitte 17 erfolgt eine beschleunigte Aufbereitung zu zündfähigem Gemisch.
   - Im Bereich der zentral angeordneten Zündkerze 6 herrscht aufgrund der zur Brennraummitte 17 symmetrischen Strömung eine geringe mittlere Geschwindigkeit bei gleichzeitig hoher Turbulenzintensität, was die Entflammung des Gemisches begünstigt.

Das mit der erfindungsgemäßen Brennkraftmaschine zu realisierende Brennverfahren kann zu folgenden zeitlich aufeinanderfolgenden Schritten zusammengefaßt werden:
1) Erzeugung eines Drallwirbels um die Zylinderlängsachse während der Ansaugphase des Motorzyklusses.
2) Aufteilung des Drallwirbels in zwei oder drei gleichsinnig rotierende Teilwirbel während der Kompressionsphase durch geeignete Gestaltung einer im Kolben befindlichen Mulde.
3) Einspritzung oder Einblasung von Kraftstoff oder Kraftstoffluftgemisch in einen der Teilwirbel während der Kompressionsphase.
4) Ausbildung einer räumlich begrenzten, kompakten Gemischwolke innerhalb des Teilwirbels.
5) Ausbildung einer lokal begrenzten Zone erhöhter Turbulenz intensität und damit beschleunigter Gemischaufbereitung im mittleren oberen Bereich des Brennraumes.
6) Optimale Entflammung der Gemischwolke durch Bereitstellung von zündfähigem Gemisch bei hoher Turbulenz intensität und geringer mittlerer Geschwindigkeit an der Zündkerze.

## Patentansprüche

1. Brennkraftmaschine mit Fremdzündung und zumindest einem hin- und hergehenden Kolben (2), mit mindestens einer Kraftstoffeinbringungseinrichtung (4) pro Zylinder (1) zur direkten Kraftstoffeinbringung in den im wesentlichen im Kolben (2) angeordneten und von einer Kolbenmulde (3) gebildeten Brennraum, welcher durch bis zum Brennraumboden (16) reichende Einschnürungen (23) in zumindest zwei Teilbrennräume (3',3'') unterteilt ist, wobei die Teilbrennräume in Draufsicht asymmetrisch ausgebildet und drehsymmetrisch zu einer durch den Brennraummittelpunkt (17) gehenden parallel zur Kolbenlängsachse liegenden Brennraumachse (27) angeordnet sind, mit einem minimalen Abstand (11) im Bereich der Einschnürungen der Brennraumwand und einem maximalen Abstand (13) in konkav ausgebildeten Bereichen der Brennraumwand (24), jeweils gemessen in einer knapp unterhalb des Kolbenbodens (2') liegenden Schnittebene (2'') ausgehend von der Brennraumachse (27), wobei das Verhältnis minimaler Abstand zum maximalen Abstand mindesten 0,2 und höchstens 0,5 beträgt, wobei während der Ansaugphase eine Drallströmung (14) im Zylinder gebildet wird, welche um eine zur Zylinderachse parallele Achse rotiert, und wobei die Brennraumwand jeder Teilkammer im Bereich des minimalen Abstandes und im bezug auf die Drallströmung stromabwärts der Einschnürung zur Kolbenlängsachse geneigt ist, wobei die Neigung sich stromabwärts stetig bis zum Bereich des maximalen Abstandes verringert, **dadurch gekennzeichnet,** daß die Kraftstoffeinbringungseinrichtung(4) in einer Position außerhalb der Brennraummitte(17) angeordnet ist, von der aus der Kraftstoff (5), vorzugsweise in einer zur Brennraumachse (27) geneigten Richtung einbringbar ist, die Zündeinrichtung (6) etwa im Bereich der Brennraummitte (17) angeordnet ist und die Einschnürungen (23) der Kolbenmulde (3) etwa in den Bereich der Brennraummitte (17) gerichtete Abströmflächen (9) etwa parallel zur Brennraumachse (27) aufweisen, deren größte Annäherung zum Brennraummittelpunkt (17) etwa zwischen 0 und 0,2 mal dem Kolbendurchmesser (D) beträgt.

2. Brennkraftmaschine nach Anspruch 1, **dadurch gekennzeichnet,** daß das Verhältnis der Tiefe (12) der Kolbenmulde (3) zum größten Abstand (13) in einem Verhältnis etwa zwischen 0,3 und 0,6 liegt.

3. Brennkraftmaschine nach Anspruch 1 oder 2, **dadurch gekennzeichnet**, daß das Verhältnis zwischen dem Abstand der Mündung (4a) der Kraftstoffeinbringungseinrichtung (4) von der Brennraummitte (17) und dem Kolbendurchmesser (D) etwa 0,1 bis 0,4 beträgt.

4. Brennkraftmaschine nach einem der Ansprüche 1 bis 3, **dadurch gekennzeichnet**, daß die Verbindungsgerade (20') zwischen der Mündung (4a) der Kraftstoffeinbringungseinrichtung (4) und der Brennraummitte (17) zu einer durch die Brennraumachse (27) verlaufenden Normalebene auf die Abströmflächen (9) etwa einen Winkel (19) zwischen -30° und 60° aufweist, wobei der Winkel (19) positiv in Wirbeldrehrichtung definiert ist.

5. Brennkraftmaschine nach einem der Ansprüche 1 bis 4, **dadurch gekennzeichnet**, daß die Symmetrieachse (4') der Kraftstoffeinbringungseinrichtung (4) zu einer zur Brennraumachse (27) senkrechten Ebene einen Winkel (20) zwischen 30° und 85° einschließt.

6. Brennkraftmaschine nach einem der Ansprüche 1 bis 5, **dadurch gekennzeichnet**, daß die Zündeinrichtung (6) maximal etwa 0,1 mal dem Kolbendurchmesser (D) von der Brennraummitte (17) entfernt ist.

7. Brennkraftmaschine nach einem der Ansprüche 1 bis 6, **dadurch gekennzeichnet**, daß die einströmseitigen Kanten (3a) der Teilbrennräume (3', 3", 3"') ein strömungsgünstig gerundetes Profil aufweisen.

8. Brennkraftmaschine nach einem der Ansprüche 1 bis 7, **dadurch gekennzeichnet**, daß in einer Draufsicht betrachtet, pro Teilbrennraum (3', 3", 3"') die Krümmung der Muldenwände (24) in Strömungsrichtung zunimmt.

9. Brennkraftmaschine nach einem der Ansprüche 1 bis 8, **dadurch gekennzeichnet**, daß die Kraftstoffeinspritzeinrichtung (4) einen kegelförmigen Strahl (5) ausbildet.

10. Brennkraftmaschine nach einem der Ansprüche 1 bis 9, dadurch gekennzeichnet, daß die Kraftstoffeinbringeinrichtung (4) als Einblaseventil ausgebildet ist.

11. Brennkraftmaschine nach einem der Ansprüche 1 bis 10, **dadurch gekennzeichnet**, daß die Kraftstoffeinbringeinrichtung (4) als Einspritzventil ausgebildet ist.

12. Brennkraftmaschine nach einem der Ansprüche 1 bis 11, **dadurch gekennzeichnet**, daß der Boden (16) der Kolbenmulde mindestens im Bereich des größten Abstandes (13) im wesentlichen eben ausgeführt ist.

## Claims

1. Internal combustion engine with spark ignition and at least one reciprocating piston (2), with at least one fuel delivery device (4) for each cylinder (1) for direct fuel delivery into the combustion chamber, which chamber is located substantially in the piston (2) and is formed by a piston recess (3), and which is divided into at least two partial chambers (3', 3") by means of restrictions (23) extending to the bottom of the combustion chamber, said partial chambers being shaped asymmetrically as seen from above and arranged rotation-symmetrically to a combustion chamber axis (27) going through the centre (17) of the combustion chamber and running parallel to the longitudinal axis of the piston, with a minimum distance (11) in the restricted areas of the wall of the combustion chamber and a maximum distance (13) in concave-shaped areas of the wall of the combustion chamber, departing from the combustion chamber axis (27) and measured in a cutting plane directly below the top of the piston, the ratio of minimum distance to maximum distance being at least 0.2 and at most 0.5, and a swirl forming in the cylinder during the intake phase and rotating about an axis parallel to the cylinder axis, and the wall of each partial combustion chamber being inclined relative to the longitudinal axis of the piston in the area of the minimum distance and, with respect to the swirl flow, downstream of the restriction, the inclination decreasing continuously downstream until the area of maximum distance is reached, **characterized in that** the fuel delivery device (4) is placed in an eccentric position relative to the combustion chamber centre (17), from where the fuel (5) may be introduced in a direction preferably inclined relative to the combustion chamber axis (27), and that the ignition device (6) is located approximately in the combustion chamber centre (17), and, further, that the restrictions (23) of the piston recess (3) are provided with guide faces (9) located approximately parallel to the combustion chamber axis (27) and directed towards the combustion chamber centre (17), whose smallest distance from the combustion chamber centre (17) is about 0 to 0.2 times the piston diameter (D).

2. Internal combustion engine according to claim 1, **characterized in that** the ratio of the depth (12) of the piston recess (3) to the maximum distance (13) is between 0.3 and 0.6 appoximately.

3. Internal combustion engine according to claim 1 or 2, **characterized in that** the ratio between the distance of the nozzle (4a) of the fuel delivery device (4) from the combustion chamber centre (17) and the piston diameter (D) is 0.1 to 0.4, approximately.

4. Internal combustion engine according to any of claims 1 to 3, **characterized in that** the straight line (20') connecting the nozzle (4a) of the fuel delivery device (4) and the combustion chamber centre (17) is at an angle (19) of about -30° to 60° to a plane normal to the guide faces (9) and going through the combustion chamber axis (27), said angle (19) being defined positive in the direction of rotation of the swirl.

5. Internal combustion engine according to any of claims 1 to 4, **characterized in that** the symmetry axis (4') of the fuel delivery device (4) forms an angle (20) of about 30° to 85° with a plane normal to the combustion chamber axis (27).

6. Internal combustion engine according to any of claims 1 to 5, **characterized in that** the distance of the ignition device (6) from the combustion chamber centre (17) does not exceed a value of about 0.1 times the piston diameter (D).

7. Internal combustion engine according to any of claims 1 to 6, **characterized in that** the edges (3a) on the inlet end of the partial combustion chambers (3', 3", 3"') are provided with a rounded profile enhancing good flow characteristics.

8. Internal combustion engine according to any of claims 1 to 7, **characterized in that** the curvature of the walls (24) of each partial chamber (3', 3", 3"') increases in flow direction, as viewed from above.

9. Internal combustion engine according to any of claims 1 to 8, **characterized in that** the jet (5) produced by the fuel delivery device (4) is shaped conically.

10. Internal combustion engine according to any of claims 1 to 9, **characterized in that** the fuel delivery device (4) is configured as an air injection valve.

11. Internal combustion engine according to any of claims 1 to 10, **characterized in that** the fuel delivery device (4) is configured as an airless injection valve.

12. Internal combustion engine according to any of claims 1 to 11, **characterized in that** the bottom (16) of the piston recess is substantially flat, at least in the area of the maximum distance (13).

## Revendications

1. Moteur à combustion interne avec allumage commandé, au moins un piston (2) animé d'un mouvement de va-et-vient et au moins un dispositif (4) d'introduction du carburant par cylindre (1), pour introduire directement le carburant dans une chambre de combustion essentiellement ménagée dans le piston (2) sous la forme d'une creusure (3), qui est séparée au moins en deux compartiments (3', 3") par des rétrécissements (23) s'étendant jusqu'au fond de la chambre de combustion, les compartiments étant asymétriques lorsqu'ils sont vus d'en haut en étant symétriques en rotation par rapport à un axe (27) passant par le centre (17) de la chambre de combustion et s'étendant parallèlement à l'axe longitudinal du piston, cet axe étant à une distance minimale (11) de la paroi de la chambre de combustion au niveau des rétrécissements et à une distance maximale (13) au niveau des zones concaves des parois de la chambre de combustion, cette distance étant mesurée dans un plan transversal juste en dessous du fond du piston en partant de l'axe (27) de la chambre de combustion, le rapport de la distance minimale sur la distance maximale étant situé dans une plage ayant 0,2 pour limite inférieure et 0,5 pour limite supérieure, un flux tourbillonnaire s'installant dans le cylindre durant la phase d'admission qui tourne autour d'un axe parallèle à l'axe du cylindre, la paroi de la chambre de combustion de chaque compartiment dans la région de la distance minimale et en aval du rétrécissement par rapport au mouvement tourbillonnaire étant inclinée par rapport à l'axe du cylindre, cette pente devenant progressivement plus raide en aval en suivant le mouvement tourbillonnaire et jusqu'à la région dans laquelle la distance est maximale, **caractérisé en ce que** le dispositif (4) d'introduction du carburant (4) est dans une position externe par rapport au centre (17) de la chambre de combustion depuis laquelle le carburant (5) est introduit suivant une direction qui est, de préférence, inclinée par rapport à l'axe (27) de la chambre de combustion, que le dispositif d'allumage (6) se trouve sensiblement au voisinage du centre (17) de la chambre de combustion et que les rétrécissements (23) de la creusure (3) du piston se trouvant sensiblement dans la région du centre (17) de la chambre de combustion présentent des parois d'écoulement (9) sensiblement parallèles à l'axe (27) de la chambre de combustion en étant distantes du point central (17) de la chambre de combustion par une fraction du diamètre (D) du piston comprise dans la plage allant d'environ 0 à 0,2.

2. Moteur à combustion interne selon la revendication 1, **caractérisé en ce que** le rapport de la profondeur (12) de la creusure (3) du piston sur la distance maximale (13) se trouve dans une plage allant de 0,3 à 0,6.

3. Moteur à combustion interne selon la revendication 1 ou la revendication 2, **caractérisé en ce que** le rapport entre la distance de l'orifice d'extrémité (4) du dispositif (4) d'introduction du carburant au centre (17) de la chambre de combustion et le diamètre (D) du piston est situé dans la plage allant de 0,1 à 0,4.

4. Moteur à combustion interne selon l'une des revendications 1 à 3, **caractérisé en ce que** la droite (20') reliant l'orifice d'extrémité (4a) du dispositif (4) d'introduction du carburant et le centre (17) de la chambre de combustion forme un angle (19) avec le plan passant par l'axe (27) de la chambre de combustion et perpendiculaire aux parois d'écoulement (9), dans la plage allant de -30° à 60°, l'angle positif (19) étant celui dans la direction du mouvement tourbillonnaire.

5. Moteur à combustion interne selon l'une des revendications 1 à 4, **caractérisé en ce que** l'axe de symétrie (4') du dispositif (4) d'introduction du carburant forme un angle (20) avec un plan perpendiculaire à l'axe (27) de la chambre de combustion, dans la plage allant de 30° à 85°.

6. Moteur à combustion interne selon l'une des revendications 1 à 5, **caractérisé en ce que** le dispositif (6) d'introduction du carburant est éloigné du centre (17) de la chambre de combustion par une fraction égale au maximum à 0,1 du diamètre (D) du piston.

7. Moteur à combustion interne selon l'une des revendications 1 à 6, **caractérisé en ce que** les bords (3a) des compartiments (3', 3", 3"') sur le côté admission ont un profil arrondi aérodynamique.

8. Moteur à combustion interne selon l'une des revendications 1 à 7, **caractérisé en ce que**, lorsqu'on regarde d'en haut, la courbure de la paroi (24) de la creusure augmente dans la direction du mouvement tourbillonnaire, dans chaque compartiment (3', 3", 3"').

9. Moteur à combustion interne selon l'une des revendications 1 à 8, **caractérisé en ce que** le dispositif (4) d'introduction du carburant forme un jet conique (5).

10. Moteur à combustion interne selon l'une des revendications 1 à 9, **caractérisé en ce que** le dispositif (4) d'introduction du carburant est réalisé comme une soupape d'admission.

11. Moteur à combustion interne selon l'une des revendications 1 à 10, **caractérisé en ce que** le dispositif (4) d'introduction du carburant est conçu comme une soupape d'injection.

12. Moteur à combustion interne selon l'une des revendications 1 à 11, **caractérisé en ce que** le fond (16) de la creusure du piston est sensiblement plat, au moins dans la partie correspondant à la distance maximale (13).
